## Europäisches Patentamt

(19) **European Patent Office**

**Office européen des brevets**

(11) Veröffentlichungsnummer: **0 225 276 B1**

(12) # EUROPÄISCHE PATENTSCHRIFT

(45) Veröffentlichungstag der Patentschrift: **24.05.89**

(51) Int. Cl.⁴: **F 16 H 25/20, F 15 B 15/06**

(21) Anmeldenummer: **86810420.9**

(22) Anmeldetag: **25.09.86**

(54) **Fluidischer Kraftverstärker.**

(30) Priorität: **29.11.85 CH 5109/85**

(43) Veröffentlichungstag der Anmeldung:
**10.06.87 Patentblatt 87/24**

(45) Bekanntmachung des Hinweises auf die Patenterteilung:
**24.05.89 Patentblatt 89/21**

(84) Benannte Vertragsstaaten:
**AT DE FR GB IT NL SE**

(56) Entgegenhaltungen:
**EP-A- 0 163 602**
**DE-A- 2 625 909**
**FR-A- 2 061 706**
**US-A- 2 854 113**

(73) Patentinhaber: **SIG Schweizerische Industrie-Gesellschaft, CH-8212 Neuhausen am Rheinfall (CH)**

(72) Erfinder: **Hampejs, Karel, Hofstettenstrasse 21, CH-8212 Neuhausen am Rheinfall (CH)**
Erfinder: **Gabriel, Stefan, Hofstettenstrasse 23, CH-8212 Neuhausen am Rheinfall (CH)**

(74) Vertreter: **White, William et al, Isler AG Patentanwalts-Bureau Walchestrasse 23, CH-8006 Zürich (CH)**

ACTORUM AG

## Beschreibung

Die vorliegende Erfindung betrifft einen fluidischen Kraftverstärker gemäss dem Oberbegriff des unabhängigen Patentanspruchs 1.

Bei elektrischen und elektronischen Steuerungen ist ein Stellmotor gefordert, der die elektrische Information möglichst genau in eine mechanische Bewegung umsetzt. Diese Motoren haben bekannterweise nur ein geringes Drehmoment, das meistens kleiner ist als das benötigte Drehmoment. Es ist deshalb bekannt geworden, mit dem Stellmotor lineare und rotative Kraftverstärker anzusteuern.

Ein linearer Kraftverstärker umfasst ein Steuerventil das zur Steuerung der Fluidströme dient, die die Verstärkung des Drehmomentes des Stellmotors mittels fluidischem Druck bewirken, und eine Gewindespindel mit Spindelmutter, von der die Lage auf der Spindel zu verstellen ist. Ein rotativer Kraftverstärker ist prinzipiell gleich aufgebaut, jedoch an Stelle von Gewindespindel und Spindelmutter tritt eine einfache Abtriebswelle.

Es ist nun die Aufgabe der Erfindung einen Kraftverstärker zu schaffen bei dem die Lage der Spindelmutter oder der Abtriebswelle mittels einer fluidischen Steuerung verstellt werden kann. Erfindungsgemäss wird diese Aufgabe gemäss den Merkmalen im kennzeichnenden Teil des Patentanspruchs 1 bewirkt.

Ein Vorschlag zur Lösung dieser Aufgabe ist aus EP-A-0 163 602 bekannt, das zum Stand der Technik nach Art. 54(3) EPÜ gehört.

Ausführungsbeispiele der Erfindung werden nachfolgend an Hand der Zeichnung erläutert. Es zeigen:

Fig. 1 eine Schnittansicht eines fluidischen Kraftverstärkers,

Fig. 2 eine Seitenansicht auf das Getriebe in Fig. 1 von der Linie II-II aus betrachtet,

Fig. 3 eine Ansicht eines Teils eines fluidischen Kraftverstärkers, zur Darstellung des Getriebes in einer zweiten Ausführungsform,

Fig. 4 eine Seitenansicht auf das Getriebe in Fig. 3 von der Linie IV-IV aus betrachtet, und

Fig. 5 eine Ansicht wie in Fig. 3 einer weiteren Ausführungsform.

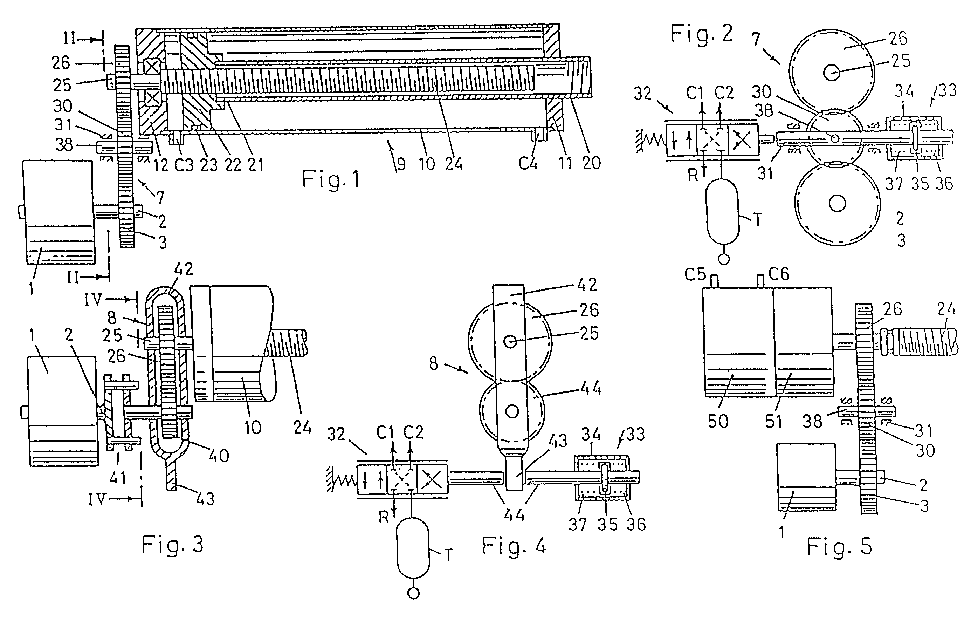

Ein gehäusefest montierter Schrittmotor 1 trägt gemäss Fig. 1 auf seiner Welle 2 ein erstes Zahnrad 3. In einem äusseren Hohlzylinder 10 mit einer Bodenwand 11 und einer Deckwand 12 befindet sich eine hohlzylindrische Schubstange 20 und diese durchstösst die Bodenwand 11 zentrisch und ist an ihrem im Hohlzylinder 10 befindlichen Ende 21 einstückig mit der Spindelmutter 22 verschlossen. Die Spindelmutter 22 ist flanschartig ausgebildet und ist mit einem Kolbenring 23 an der Innenwand des Hohlzylinders 10 abgedichtet. Damit kann die Spindelmutter als zweiseitig wirkender Kolben wirken.

Die Spindel 24 ist in der Deckwand 12 drehbar gelagert. Nicht dargestellt ist eine Dichtung zum dichtenden Verschliessen der Lageröffnung in der Deckwand. Die Spindel 24 trägt eine axiale Verlängerung 25 auf der ein zweites Zahnrad 26 befestigt ist.

Zwischen dem ersten Zahnrad 3 und diesem zweiten Zahnrad 26 befindet sich ein drittes Zahnrad 30, das in einem translatorisch verschiebbaren Träger 31 drehbar gelagert ist, derart, dass bei ungleichen Drehwinkeln der beiden gleichen Zahnräder 3, 26 das dritte Zahnrad in axialer Richtung des Trägers 31 verschoben wird. Der Träger 31 ist einerseits mit einem Steuerventil 32 und anderseits mit einer Federanordnung 33 zur Festlegung einer Nullstellung verbunden. Diese Federanordnung besteht im Prinzip aus einem Gehäuse 34, einer Scheibe 35, die starr mit dem Träger 31 verbunden ist und zwei Schraubenfedern 36, 37 mit denen die Scheibe 35 in einer Mittelstellung zentriert ist. Diese Federanordnung übernimmt gleichzeitig eine Schwingungsdämpfung des Träger-Ventil-Systems. Selbstverständlich könnten auch andere, bekannte Dämpfer-Elemente angebaut werden.

Wenn die an der Schubstange 20 angreifende Kraft grösser ist als das Drehmoment des Stellmotors 1 zu betätigen vermag, so wird das dritte Zahnrad 30 aus der gezeichneten Lage verschoben, sobald die Kraft die Vorspannkraft der Federn 36, 37 übersteigt und damit wird der Träger 31 ausgelenkt. Mit dieser Auslenkung werden die Steuerkanten im Steuerventil 32 verschoben und vom Druckfluid-Speicher T wird Fluid über einen der beiden Anschlüsse C1, C2 an den entsprechenden Anschluss C3, C4 am Zylinder 10 geführt. Über die jeweils andern beiden Anschlüsse gelangt das Fluid zum Anschluss R am Steuerventil 32.

In einer zweiten Ausführungsform ist ein erstes Zahnrad 40 über eine Auslenk-Kupplung 41 mit der Welle 2 des Stellmotors 1 verbunden. Das zweite Zahnrad 26 ist wie im vorangehend beschriebenen Beispiel mit der Verlängerung 25 der Spindel 24 verbunden und kämmt mit dem ersten Zahnrad 40.

In einem Träger 42 sind beide Zahnräder 26, 40 untergebracht und die Verlängerung 25 der Spindel 24 dient zugleich auch als Drehlager für den Träger 42, der damit schwimmend gelagert ist. Eine Endpartie 43 des Trägers 42 bewegt sich somit in Fig. 3 senkrecht zur Zeichenebene, wenn eine grössere Kraft an der Schubstange 20 angreift, als vom Motor 1 angebracht werden kann. Gemäss Fig. 4 wird diese Bewegung gleichermassen wie im ersten Ausführungsbeispiel auf das Steuerventil 32 übertragen, wobei eine Verstellstange 44 vorhanden ist, die mit der Federanordnung 33 zentriert und schwingungsgedämpft ist.

Eine weitere Variante ist in Fig. 5 dargestellt. Anstelle des Zylinders 10 und einer als Kolben ausgebildeten Spindelmutter könnte auch ein Fluidmotor 50 vorhanden sein, dessen Anschlüsse C5, C6 mit den Anschlüssen C1, C2 des Steuerventils 32 in Fig. 2 verbunden sind, so dass die Spindel 24 mit der Kraft dieses Fluidmotors 50 gedreht werden kann. Als Steuerung für das Steuerventil 32 kann dieselbe Anordnung mit 3 Zahnrädern wie im ersten Ausführungsbeispiel verwendet werden. Um die hohe Drehzahl eines solchen Fluidmotors an die Drehzahl des Stellmotors 1 anzugleichen ist in bekannter Art ein Getriebe 51 vorhanden.

## Patentansprüche

1. Fluidischer Kraftverstärker zur Verstärkung der auf eine Spindel (24) eines linearen Stellantriebes (9) wirkenden Antriebskraft eines Stellmotors (1), gekennzeichnet durch ein fluidisches Antriebsgerät (9, 50) zur Erzeugung einer das Drehmoment des Stellmotors (1) unterstützenden Kraft an der Spindel (24) für die Verstellung der Spindelmutter (22), wobei die Kraft eine dem von der Spindel (24) aufzubringenden Drehmoment vergleichbare Grösse hat, eine Getriebeanordnung (7, 8) für die Übertragung des Drehmomentes vom Stellmotor (1) zur Spindel (24), die Steuermittel (31, 33, 42, 43, 44) zur Feststellung eines Unterschiedes bezüglich der Drehwinkel zwischen der Welle (2) des Stellmotors (1) und der Spindel (24), sowie zur Verstellung des Steuerkolbens eines Steuerventils (32) für die Abgabe eines Druckfluids an das Antriebsgerät (9, 50) umfasst.

2. Verstärker nach Patentanspruch 1, dadurch gekennzeichnet, dass als fluidisches Antriebsgerät (9) ein fluidischer Zylinder (10) mit Bodenwand (11) und Deckwand (12) vorhanden ist, in dessen Hohlraum die Spindelmutter (22) als zweiseitig wirkender Kolben angeordnet ist und mit einer hohlzylindrischen Schubstange (20) starr verbunden ist, und dass die Schubstange (20) die Bodenwand (11) als Kolbenstange durchstösst.

3. Verstärker nach Patentanspruch 2, dadurch gekennzeichnet, dass die Getriebeanordnung (7) ein erstes Zahnrad (3) auf der Welle (2) des Stellmotors (1), ein zweites Zahnrad (26) und ein mit erstem und zweitem Zahnrad kämmendes drittes Zahnrad (30) umfasst, dass ferner die Welle (38) des dritten Zahnrades (30) parallel zur Welle (2) und zur Achse der Spindel (24) liegend in einem translatorisch verschiebbar geführten Träger (31) gelagert ist, und dass der Träger (31) einerseits mit einer die Lage zentrierenden Federanordnung (33) und andererseits mit dem Steuerkolben des Steuerventils (32) verbunden ist (Fig. 1, 2).

4. Verstärker nach Patentanspruch 2, dadurch gekennzeichnet, dass die Getriebeanordnung (8) ein mit der Welle (2) des Stellmotors (1) verbundenes erstes Zahnrad (40) und ein mit der Spindel (24) verbundenes zweites Zahnrad (26) umfasst, welche Zahnräder (26, 40) zwischen den Schenkeln eines gabelförmigen Trägers (42) mit zueinander parallelen Wellen (45, 46) drehbar und miteinander kämmend angeordnet sind, dass ferner der Träger (42) frei drehbar an der Spindelachse (25) gelagert ist und mit der der Lagerseite gegenüberliegenden Endpartie (43) mit einer Verstellstange (44) in Wirkverbindung steht, und dass die Verstellstange (44) einerseits mit einer deren Lage zentrierenden Federanordnung (33) und andererseits mit dem Steuerkolben des Steuerventils (32) verbunden ist (Fig. 3, 4).

5. Verstärker nach Patentanspruch 1, dadurch gekennzeichnet, dass das Antriebsgerät (50) ein Fluidmotor ist, mit einem Reduktionsgetriebe (51) zum Antreiben der Spindel (42).

6. Verstärker nach Patentanspruch 5, dadurch gekennzeichnet, dass die Getriebeanordnung ein auf der Welle (2) des Stellmotors (1) befestigtes erstes Zahnrad (3), ein am Antrieb (52) des Fluidmotors (50) befestigtes zweites Zahnrad (26) mit gleichem Durchmesser und ein mit den beiden genannten Zahnrädern (3, 26) kämmendes drittes Zahnrad (30) umfasst, dass die Welle (38) des dritten Zahnrades (30) drehbar in einem translatorisch verschiebbar geführten Träger (31) gelagert ist, und dass der Träger (31) einerseits mit einer dessen Lage zentrierenden Federanordnung (33) und andererseits mit dem Steuerkolben des Steuerventils (32) verbunden ist.

## Claims

1. Fluid force amplifier for amplifying the driving force, which acts on a spindle (24) of a linear servodrive (9), of a servomotor (1), characterised by a hydraulic driving mechanism (9, 50) for producing a force which reinforces the torque of the servomotor (1) at the spindle (24) for adjusting the spindle nut (22), the force being of a magnitude which is comparable with a torque which is to be applied by the spindle (24), and a gear unit arrangement (7, 8) which transmits the torque from the servomotor (1) to the spindle (24) and comprises control means (31, 33, 42, 43, 44) for determining a difference in the angles of rotation between the shaft (2) of the servomotor (1) and the spindle (24), and for adjusting the control piston of a control valve (32) for delivering a hydraulic fluid to the driving mechanism (9, 50).

2. Amplifier according to patent claim 1, characterised in that a hydraulic cylinder (10) with a bottom wall (11) and a cover wall (12) is provided as the hydraulic driving mechanism (9), the spindle nut (22) being arranged in the hollow space of the cylinder as a double-acting piston and being rigidly connected to a hollow cylindrical push rod (20), and that the push rod (20) passes through the bottom wall (11) as a piston rod.

3. Amplifier according to patent claim 2, characterised in that the gear unit arrangement (7) comprises a first gearwheel (3) on the shaft (2) of the servomotor (1), a second gearwheel (26) and a third gearwheel (30), which meshes with the first and second gearwheels, that the shaft (38) of the third gearwheel (30) is mounted parallel to the shaft (2) and to the axis of the spindle (24) in a carrier (31), which can be moved in a translatory manner, and that the carrier (31) is connected at one side to a spring arrangement (33), which centres the position, and at the other to the control piston of the control valve (32) (Figs. 1, 2).

4. Amplifier according to patent claim 2, characterised in that the gear unit arrangement (8) comprises a first gearwheel (40), which is connected to the shaft (2) of the servomotor (1), and a second gearwheel (26), which is connected to the spindle (24), which gearwheels (26, 40) are arranged in a rotatable manner, between the side pieces of a forked carrier (42) with parallel shafts (45, 46) such that they mesh with one another, that the carrier (42) is mounted at the spindle shaft (25) such that it can rotate freely and is operatively connected by the end part (43), disposed opposite the bearing side, to an adjusting rod (44), and that the adjusting rod (44) is connected at one side to a spring arrangement (33), which centres its position, and at the other to the control piston of the control valve (32) (Figs. 3, 4).

5. Amplifier according to patent claim 1, characterised in that the driving mechanism (50) is a hydraulic motor, with a reduction gear unit (51) for driving the spindle (42).

6. Amplifier according to patent claim 5, characterised in that the gear unit arrangement comprises a first gearwheel (3), which is secured to the shaft (2) of the servomotor (1), a second gearwheel (26), which is secured to the drive (52) of the hydraulic motor (50) and has the same diameter, and a third gearwheel (30), which meshes with the two said gearwheels (3, 26), that the shaft (38) of the third gearwheel (30) is rotatably mounted in a carrier (31), which can be moved in a translatory manner, and that the carrier (31) is connected at one side to a spring arrangement (33), which centres its position, and at the other to the control piston of the control valve (32).

## Revendications

1. Amplificateur de force fluidique pour l'amplification de la force motrice d'un moteur de positionnement (1) agissant sur la broche (24) d'un actionneur linéaire (9), caractérisé par un appareil moteur fluidique (9, 50) pour la production, au niveau de la broche (24), d'une force qui renforce le couple de rotation du moteur de positionnement (1) en vue du déplacement de l'écrou de broche (22), cette force ayant une grandeur comparable au couple de rotation qui doit être appliqué par la broche (24), et par un train d'engrenages (7, 8) pour la transmission du couple de rotation du moteur de positionnement (1) à la broche (24), train d'engrenages qui comprend des moyens de commande (31, 33, 42, 43, 44) pour la détermination d'une différence en ce qui concerne l'angle de rotation entre l'arbre (2) du moteur de positionnement (1) et la broche (24), ainsi que pour le réglage du piston de commande d'une vanne-pilote (32) délivrant un fluide sous pression à l'appareil moteur (9, 50).

2. Amplificateur selon la revendication 1, caractérisé en ce qu'il est prévu, en tant qu'appareil moteur fluidique (9), un cylindre fluidique (10) qui comporte un fond (11) et un couvercle (12) et dans la cavité duquel l'écrou de broche (22) est disposé en tant que piston à double effet et est raccordé rigidement à une tige de poussée cylindrique creuse (20), et en ce que la tige de poussée (20) traverse le fond (11) du cylindre en tant que tige de piston.

3. Amplificateur selon la revendication 2, caractérisé en ce que le train d'engrenages (7) comprend une première roue dentée (3) sur l'arbre (2) du moteur de positionnement (1), une deuxième roue dentée (26) et une troisième roue dentée (30) en prise avec les première et deuxième roues dentées, en ce que l'arbre (38) de la troisième roue dentée (30) est monté, parallèlement à l'arbre (2) et à l'axe de la broche (24), dans un support (31) guidé de façon à pouvoir effectuer un mouvement de translation, et en ce que le support (31) est raccordé d'un côté à un dispositif à ressort (33) qui centre sa position et, de l'autre côté, au piston de commande de la vanne-pilote (32) (fig. 1, 2).

4. Amplificateur selon la revendication 2, caractérisé en ce que le train d'engrenages (8) comprend une première roue dentée (40) fixée à l'arbre (2) du moteur de positionnement (1) et une seconde roue dentée (26) fixée à la broche (24), roues dentées (26, 40) qui sont montées à rotation et en prise mutuelle entre les branches d'un support bifurqué (42) muni d'arbres parallèles entre eux (45, 46), en ce que le support (42) est monté à rotation libre sur l'axe (25) de la broche et coopère, par sa partie d'extrémité (43) opposée à son côté de montage, avec une barre de réglage (44), et en ce que la barre de réglage (44) est raccordée d'un côté à un dispositif à ressort (33) qui centre sa position et, de l'autre côté, au piston de commande de la vanne-pilote (32) (fig. 3, 4).

5. Amplificateur selon la revendication 1, caractérisé en ce que l'appareil moteur (50) est un moteur à fluide avec un engrenage réducteur (51) pour l'entraînement de la broche (24).

6. Amplificateur selon la revendication 5, caractérisé en ce que le train d'engrenages comprend une première roue dentée (3) fixée sur l'arbre (2) du moteur de positionnement (1), une deuxième roue dentée (26) de même diamètre, fixée au mécanisme de transmission (52) du moteur à fluide (50), et une troisième roue dentée (30) en prise avec ces deux roues dentées (3, 26), en ce que l'arbre (38) de la troisième roue dentée (30) est monté à rotation dans un support (31) guidé de façon à pouvoir effectuer un mouvement de translation, et en ce que le support (31) est raccordé d'un côté à un dispositif à ressort (33) qui centre sa position et, de l'autre côté, au piston de commande de la vanne-pilote (32).

EP 0 252 276 B1

Fig. 1

Fig. 2

Fig. 3

Fig. 4

Fig. 5